# NEW EUROPEAN PATENT SPECIFICATION

(11) **EP 1 600 005 B2**
(45) Date of publication and mention of the opposition decision: **31.07.2013**
(45) Mention of the grant of the patent: 14.06.2006
(21) Application number: 04707275.6
(22) Date of filing: 02.02.2004
(51) Int. Cl.: H04N 9/30, H04N 7/46, H04N 9/64, G09G 3/20

(54) **PROCESSING SIGNALS FOR A COLOR SEQUENTIAL DISPLAY**
VERARBEITUNG VON SIGNALEN FÜR EINE FARBSEQUENTIELLE ANZEIGE
SIGNAUX DE TRAITEMENT POUR AFFICHAGE SEQUENTIEL COULEUR

(30) Priority: 14.02.2003 EP 03100345; 19.06.2003 EP 03101817
(43) Date of publication of application: 30.11.2005
(73) Proprietor: NXP B.V., 5656 AG Eindhoven (NL)
(72) Inventor: RIEMENS, Abraham, K., NL-5656 AA Eindhoven (NL); DE HAAN, Gerard, NL-5656 AA Eindhoven (NL)
(74) Representative: Schouten, Marcus Maria
(86) International application number: PCT/IB2004/050072
(87) International publication number: WO 2004/073315

(56) References cited:
- WO-A-01/10131
- WONG C W ED - STORER J A ET AL: "Motion-compensated video image compression using luminance and chrominance components for motion estimation" DATA COMPRESSION CONFERENCE, 1991. DCC '91. SNOWBIRD, UT, USA 8-11 APRIL 1991, LOS ALAMITOS, CA, USA,IEEE COMPUT. SOC, US, 8 April 1991 (1991-04-08), page 440, XP010034212 ISBN: 0-8186-9202-2
- HAAN DE G ET AL: "IC FOR MOTION-COMPENSATED 100 HZ TV WITH NATURAL-MOTION MOVIE-MODE" IEEE TRANSACTIONS ON CONSUMER ELECTRONICS, IEEE INC. NEW YORK, US, vol. 42, no. 2, 1 May 1996 (1996-05-01), pages 165-174, XP000596762 ISSN: 0098-3063
- PHILIPS ELECTRONICS N.V.: 'TV Reference design GT 4000 update AN 99063' APPLICATION NOTE 1999,
- PHILIPS ELEXTRONICS N.V. 2000: 'TDA 9321 H, I2C-bus controlled TV input processor, prel.spec.' DATA SHEET 25 September 2000,
- PHILIPS ELECTRONICS N.V. 2000 (INSGESAMT 70 SEITEN): 'Improved Picture Quality (IPQ) Module MK11,Version1.0,AN00009' APPLICATION NOTE 2000,
- PHILIPS ELECTRONICS N.V. 2001 (INSGESAMT 93 SEITEN): 'Improved Picture Quality (IPQ) Module MK12, Version 1.0,AN1017' APPLICATION NOTE 2001,
- KONINKLIJKE PHILIPS ELECTRONICS N.V.2002 (INSGESAMT 56 SEITEN): 'TDA933xH series,I2C-bus controlled TV display processors' DATA SHEET, PRELIMINARY SPECIFICATION VOM 04.06.2002 2002,

## Description

The invention relates to a method for processing signals representing a series of colored pictures, which colored pictures are to be displayed on a color sequential display. The invention relates equally to an apparatus and to a system for displaying a series of pictures on a color sequential display.

It is known from the state of the art to present pictures of a picture sequence by displaying separate color components of each picture, typically Red, Green and Blue. There exist different approaches for displaying such separate color components. Essentially, generating color is a trade-off between spatial and temporal resolution of the display.

A first type of display devices, like CRT (cathode-ray tube) or LCD (liquid crystal display) devices, generate and display all color components simultaneously. In case of Red, Green and Blue color components, for instance, red, green and blue colored dots are projected simultaneously onto the screen, which adds to the spatial resolution of the display. Due to the simultaneous display, a dedicated hardware portion has to be employed for each color component.

A second type of displays, like LCoS (Liquid Crystal on Silicon) displays, in contrast, display the color components of each picture sequentially, e.g. first the Red color component, then the Green color component and finally the Blue color component of each picture. The LCoS display thus generates three times light for each single dot, which adds to the temporal resolution of the display. The image rate of the color components is typically three times the picture rate of the series of pictures that is to be presented. It is an advantage of this approach that a very high resolution can be achieved at relatively limited costs, since the same hardware can be used sequentially for each color component.

Conventionally, the color component signals for a sequential display of color components originate directly from the input signal. The sequential display of color components, however, introduces artifacts with moving objects in the video scene. Since the individual color components are displayed at different instances of time, only one of the color components can be displayed according to the original motion trajectory. If, for example, the Red signals are displayed according to the original motion trajectory, i.e. at the correct picture position at the time of display, the deviation of the Green and Blue signals from the original motion trajectory causes an artifact known as "color break-up".

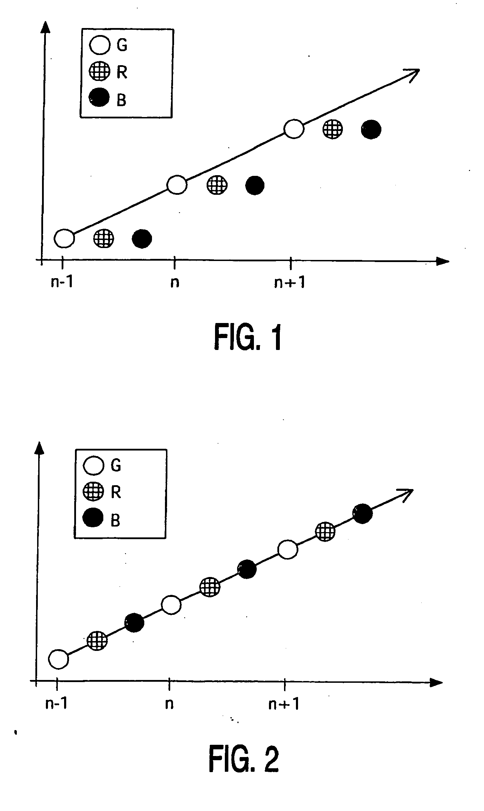

Fig. 1 illustrates such a conventional display of color components of a picture sequence. Fig. 1 is a diagram depicting the position of an object in a picture over the picture number n. An arrow in the diagram indicates the motion of a white ball in the picture sequence. The ball is split for each picture into a green color component G, a red color component R and a blue color component B, which are displayed in sequence. As can be seen, the green color component is always displayed at the correct position of the white ball. The red and blue color components are presented for each picture at the same position of the picture as the Green color components, but at later instances of time, which is visible as the afore mentioned "color break-up" in the displayed video.

In order to avoid such an artifact, it has been proposed for color sequential display applications to perform a motion estimation on the picture sequence and to apply a corresponding motion compensation to the color components in the primary color space. Similar techniques have been applied in scan rate conversion TV sets and are also well suited for application in color sequential displays. In a straightforward implementation, two of the three color components have to be motion compensated.

Fig. 2 illustrates a display of color components of a picture sequence with such a motion compensation. Fig. 2 is a diagram presenting again the position of an object in a picture over the picture number n, in which an arrow indicates the motion of a white ball. The green color component G is always displayed at the correct position of the white ball without motion compensation as before. The red color component R and the blue color component B are presented for each picture again at later instances of time than the Green color components. In this case, however, the red color component R was motion compensated with a motion vector determined for the instance of time at which the respective red color component is to be displayed, while the blue color component B was motion compensated with a motion vector determined for the instance of time at which the respective Blue color component is to be displayed. The respective motion vector is determined e.g. by interpolating the position of the ball at the time instances of the presentation of the Green color components. As a result, also the red color component R and the blue color component B are always displayed at the correct position of the white ball, which implies in the case of motion that the moving object is displayed at another picture position for each color component.

A motion compensation of at least one color component has been described for example in international patent application WO 01/10131 A1. The presented compensation scheme determines motion vectors for areas or objects within an image stream, predicts the object position for respective times of presentation of respective color components, e.g. by interpolation or extrapolation, and sequentially displays the respective color planes representing the areas or objects at the predicted position. It is also proposed that a decision of a reference time for the most important color component, e.g. Green, is taken at a moment in time for which no motion compensation interpolation is required.

At the high picture rate of typically 180 Hz and the usually high spatial resolution of the display, the implementation costs of functions compensating two out of three color components is significant. A motion compensation of only a single color component, on the other hand, will often not lead to a satisfactory reduction of an artifact.

It is an object of the invention to enable a presentation of high quality images using a color sequential display device at reduced costs. The invention is defined by the independent claims. The dependent claims define advantageous embodiments.

The at least three primary color components can be for example the primary color components Red, Green and Blue, but also any other three primary color components. The at least three primary color components may further comprise more than three primary color components for use with a multi-primary display. The color space which is different from a primary color space can be in particular, though not exclusively, a luminance /chrominance space or a similar space defined for multi-primary color components. The primary color components which are displayed for a respective color picture can be displayed either entirely in sequence or only partly in sequence. In case of four primary color components, for example, the first two of the four primary color components could be displayed simultaneously, and thereafter the second two primary color components of the four primary color components could displayed simultaneously.

The invention proceeds from the consideration that a representation of a signal in another color space than the primary color space may require less bandwidth than a representation of the same perceived quality in the primary color space. The Human Visual System (HVS) is for instance more sensitive to luminance errors than to chrominance errors and, therefore, a representation of a signal in the luminance/chrominance space requires less bandwidth than a representation of the same perceived quality in the primary color space. For example, for a high-quality YUV signal processing, a 4:2:2 sampling grid is generally recommended, while RGB processing requires a 4:4:4 sampling grid. On the other hand, it is necessary to obtain a compensation of a motion in the primary color space. It is therefore proposed that a motion compensation of data is performed in another color space than the primary color space, and that the obtained signals are then converted into the primary color space for display.

It is an advantage of the invention that it enables a simpler and thus cheaper motion compensation, while the advantages in the perceived image quality are maintained.

The typical use of the invention is in the primary color space. In this case, i.e. if the received signals representing a series of colored pictures constitute color components of said series of colored pictures, the color components are first converted into the color space which is different from the primary color space, before the motion compensation is applied on the resulting signals in the color space which is different from the primary color space. In some applications, however, signals in the color space which is different from the primary color space may already be available in the system, and a dedicated conversion for the motion compensation is not required.

A motion compensation is generally based on a motion estimation, which can be carried out at any location and in any color space.

In case the color space which is different from the primary color space is the luminance/chrominance space, the motion is preferably only estimated proceeding from the luminance signal, while the color information in the signal is neglected in the estimation part of the processing. In the most economical approach, moreover only the luminance is motion compensated based on the estimated motion. The motion compensated luminance information and the non-motion compensated chrominance information are then converted to the required color components, e.g. by means of a matrix. As the HVS is more sensitive to errors in the luminance than it is to errors in chrominance, motion compensation of luminance yields most of the perceived image improvements, such that the motion portrayal of chrominance can be reduced in quality. Since this results in less motion compensation on chrominance signals, a cost saving is achieved.

However, also the chrominance signals can be compensated in the luminance/chrominance space based on the motion estimated proceeding from the luminance signal or based on a motion estimated proceeding from the chrominance signals. Even in this case, the motion compensation in the luminance/chrominance space is simpler than in the primary color space due to the higher bandwidth in the primary color space.

The compensation can be performed separately for each instance of display of the primary color components, similarly as known from the state of the art. Thereby, at least a part of the color space which is different from the primary color space, e.g. at least the luminance in a luminance/chrominance color space, is made valid at the time instance at which the primary colors are needed for display.

Further, it is possible to compensate at least part of the color space which is different from the primary color space only for a single temporal instance, e.g. for the most important temporal instance. For example, the chrominance signals or even the complete set of luminance and chrominance signals in the luminance/chrominance space may be compensated only for a single temporal instance.

In one preferred embodiment, motion vectors are derived from a single motion estimation operation for each successive pair of pictures for the motion compensation, and these motion vectors are applied on the correct temporal instances for the respective displayed color components. Even though a small error is made, a significant cost saving is achieved by only performing a single motion estimation.

If the motion vectors are derived from a single motion estimation operation for each successive pair of pictures, the motion compensation is advantageously performed for multiple pictures in a single pass. For most motion compensated temporal interpolation algorithms, both the motion compensated and the non-motion compensated data is required. Therefore, the same non-motion compensated data is used for both output images. A significant saving in data access is achieved when these two images are generated in a single pass.

In case the color space which is different from the primary color space is the luminance/chrominance space and in case the chrominance signals are to be motion compensated as well in the luminance/chrominance space, preferably, the number of temporal instances of the motion compensated chrominance signals is reduced compared to the number of temporal instances of the motion compensated luminance signals.

In case only the luminance signal is to be motion compensated, the chrominance signals are preferably calculated by means of a median filter operation using non-motion compensated samples from a preceding picture, non-motion compensated samples from a current picture and a value indicating an absence of color.

If the received signals are interlaced signals, the signals are preferably de-interlaced in the luminance/chrominance space. Advantageously, this de-interlacing is motion compensated with motion vectors derived from a motion estimation.

The invention can be employed in any apparatus or system employing a color sequential display, e.g. in a television set. The color sequential display can but does not have to be part of an apparatus according to the invention.

The invention can be implemented in hardware or as a software program.

The invention allows the reuse of existing algorithms and implementations of video format conversions, like scan rate conversions in existing TV systems, for application in color sequential displays, if motion vectors are estimated only for a luminance signal.

These and other aspects of the invention will be apparent from and elucidated with reference to the embodiments described herein after under consideration of drawings.
Fig. 1 is a diagram illustrating the display of color components of a video in a conventional color sequential display system without motion compensation;
Fig. 2 is a diagram illustrating the display of color components of a video in a conventional color sequential display system with motion compensation;
Fig. 3 is a block diagram of a color sequential display system in which a first embodiment of the invention is implemented;
Fig. 4 is a block diagram of a color sequential display system in which a second embodiment of the invention is implemented;
Fig. 5 illustrates a first type of motion compensation which can be employed in the system of Fig. 3 or 4; and
Fig. 6 illustrates a second type of motion compensation which can be employed in the system of Fig. 3 or 4.

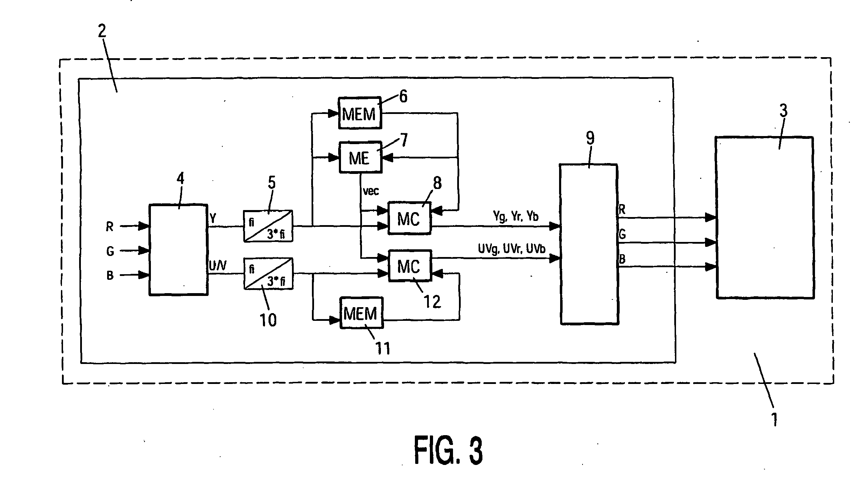

Fig. 3 is a schematic block diagram of a color sequential display system, e.g. a TV set, in which a first embodiment of the invention is implemented. The system 1 comprises a processing component 2 and a color sequential display component 3.

The processing component 2 comprises a first matrix portion 4, which constitutes at the same time a receiving portion of the processing component 2 for receiving RGB signals. The first matrix 4 has a Y output and a U/V output.

The Y output of the first matrix portion 4 is connected via a first compression portion 5 to the respective input of a first memory MEM 6, of a motion estimation portion ME 7 and of a first motion compensation portion MC 8. An output of the first memory 6 is connected to a further input of the motion estimation portion 7 and to a further input of the first motion compensation portion 8. An output of the motion estimation portion 7 is connected to a third input of the first motion compensation portion 8. An output of the first motion compensation portion 8 is connected to a first input of a second matrix portion 9.

The U/V output of the first matrix portion 4 is connected via a second compression portion 10 to the respective input of a second memory MEM 11 and of a second motion compensation portion MC 12. An output of the second memory 11 is connected to a further input of the second motion compensation portion 12. An output of the motion estimation portion 7 is connected to a third input of the second motion compensation portion 12. An output of the second motion compensation portion 12 is connected to a second input of the second matrix portion 9.

When a sequence of color pictures is to be presented by the display component 3, Red R, Green G and Blue B color components RGB of the picture sequence have to be provided to the display component 3. Successive color pictures are spaced at a first time interval, the number of a respective picture in the picture sequence being denoted by n. Available color components RGB of the picture sequence are first input to the first matrix portion 4.

The first matrix portion 4 converts the received color components RGB by a matrix operation in a known manner to luminance and chrominance signals YUV. The conversion includes a down-conversion to obtain a reduced bandwidth. More specifically, the sampling grid of the color components RGB is 4:4:4, while the sampling grid for the YUV signals is 4:2:2. That is, the resolution of the chrominance signals is only half of the resolution of the luminance signal and half of the resolution of each of the original RGB components. Alternatively, the YUV signals could be already available in the system.

The color components RGB of each picture are to be displayed by the display component 3 successively in equal, predetermined second time intervals, which second time interval is typically 1/3 of the first time interval. Moreover, the order of display of the color components is typically Green-Red-Blue for each picture. The luminance signal Y is therefore time-compressed and delayed accordingly by the first compression portion 5, and the chrominance signals UV are time-compressed and delayed accordingly by the second compression portion 10.

The luminance signal Y for picture n output by the first compression portion 5 is provided to the first memory 6, to the motion estimation portion 7 and to the first motion compensation portion 8, while the chrominance signals UV for picture n output by the second compression portion 10 are provided to the second memory 11 and to the second motion compensation portion 10. At the same time, the first memory 6 provides the stored luminance signal Y for the preceding picture n-1 to the motion estimation portion 7 and to the first motion compensation portion 8. Further, the second memory 11 provides the stored chrominance signals U/V for the preceding picture n-1 to the second motion compensation portion 12. Based on the received signals, the motion estimation portion 7 estimates motion from a respective picture to the next, i.e. between picture n-1 and picture n. The instances of time at which the Green color components of the picture sequence are to be displayed are selected as reference time, i.e. as time instances of pictures n-1 and n. The motion estimation portion 7 moreover calculates motion vectors *vec* for all parts of a picture, e.g. by interpolation. The motion vectors indicate the motion in different parts of a picture that should have taken place when proceeding from picture n-1 until a specific instance of time between the time instances of the two pictures n-1 and n between which the respective motion was estimated. For the Red and Blue components of the luminance signal Y, common or separate motion vectors are determined, as will be described by way of example in more detail below. The determined motion vectors vec are then provided by the motion estimation portion 7 to the first motion compensation portion 8 and to the second motion compensation portion 12. Alternatively, the motion vectors could also be calculated by the motion compensation portions 8 and 12 based on motion information received from the motion estimation portion 7.

Since the instances of time at which the Green color components of the picture sequence are to be displayed are selected as reference time, the first motion compensation portion 8 forwards the received luminance signal Y for a picture n-1 without motion compensation as signal Yg to the first input of the second matrix portion 9. The second motion compensation portion 12 similarly forwards the received chrominance signals UV for a picture n-1 without motion compensation as signal UVg to the second input of the second matrix portion 9. Yg yields the luminance signal at the temporal instance of the Green component and UVg yields the chrominance signals at the temporal instance of the Green component.

The first motion compensation portion 8 motion moreover compensates the received luminance signal Y for picture n-1 based on the received motion vectors vec separately for the Red and Blue component of the luminance signal Y. The first motion compensation portion 8 then provides the motion compensated Yr of the luminance signal Y and the motion compensated Yb of the luminance signal Y to the first input of the second matrix portion 9. Yr yields the luminance signal at the temporal instance of the Red component. Similarly, Yb yields the luminance signal at the temporal instance of the Blue component. The second motion compensation portion 12 motion compensates the received UV signals for picture n-1 based on the received motion vector or vectors vec separately for the Red and Blue component of the chrominance signals UV. The second motion compensation portion 12 then provides the motion compensated UVr of the chrominance signal UV and the motion compensated UVb of the chrominance signal UV to the second input of the second matrix portion 9. UVr yields the chrominance signal at the temporal instance of the Red component. Similarly, UVb yields the chrominance signal at the temporal instance of the Blue component.

The second matrix portion 9 converts the received YUV signals by a matrix operation into motion compensated color components RGB with a sampling grid of 4:4:4. The motion compensated color components RGB are then provided to the color sequential display component 3, which projects the received RGB color components successively in a known manner on a screen.

Since the bandwidth in the YUV space is smaller than in the primary color space, the required amount of processing is reduced compared to the known motion compensation in the primary color space. Furthermore, a motion estimation is only required at the luminance signal.

It is to be understood that the compression could also be applied to the color components RGB before they are input to the first matrix portion 4. This would, however, require three field memories, while it is possible to achieve quite the same result with only two field memories 5, 10 which are arranged as indicated in Fig. 3. Performing the compression in the luminance/chrominance space is thus more cost efficient. Moreover, from a functional point of view, it is equally possible to perform the compression only after the motion compensation or even to apply the compression on the color components RGB which are output by the second matrix portion 9. This would further increase the number of required memories, though.

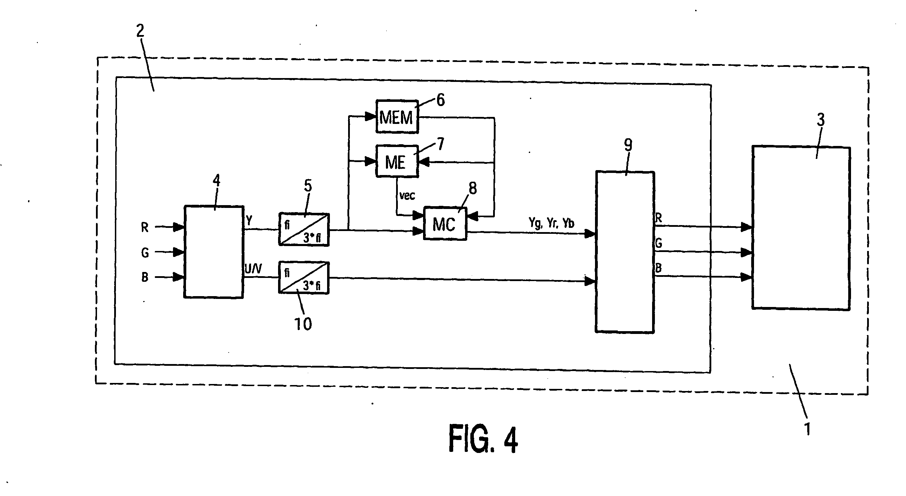

Fig. 4 is a schematic block diagram of a color sequential display system, e.g. a TV set, in which a second embodiment of the invention is implemented. The second embodiment allows an even further reduction of the required processing. The same reference signs were used for corresponding components as in Fig. 3.

The structure of the color sequential display system 1 of Fig. 4 is identical to the structure of the color sequential display system 1 of Fig. 3, except that the output of the second compression portion 10 is connected directly to the second input of the second matrix portion 9. The second memory 11 and the second motion compensation portion 12 are missing.

The operation of the remaining components is the same as described with reference to Fig. 3.

The second matrix portion 9 thus receives motion compensated luminance signals Yr, Yb and Yg as before, and in addition non-motion compensated chrominance information U/V instead of motion compensated chrominance signals UVr, UVb and UVg. The second matrix portion 9 converts the received information by a matrix operation into the required RGB color components. The resulting RGB color components are provided again to the display component 3 for display.

Since the Human Visual System is most sensitive to luminance artifacts, significant cost savings can be achieved by eliminating the chrominance motion compensation as in the system of Fig. 4, without introducing strong perceived artifacts.

The motion estimation and compensation can be performed in both systems as known from the state of the art, e.g. as presented above with reference to Fig. 2. For instance, in case the Green color component is assumed to be displayed at the correct position, dedicated motion vectors are determined for the time instance of display of the Red color component and of the Blue color component. The respectively associated motion vectors are then used for compensating the Red component of the luminance signal Y and of the Blue color component of the luminance signal Y.

Alternatively, all motion vectors are derived from a single motion estimation operation for each successive pair of pictures n-1 and n, i.e. for a single instance of time between the time instances of the two pictures n-1 and n. The motion vectors are then applied for the motion compensation on the correct temporal instances for the respective components of the luminance signal Y and, in the system of Fig. 3, of the chrominance signals UV.

It is to be noted that in the systems of Figs. 3 and 4, the motion estimation and compensation is performed in the output picture rate space. Therefore, the motion vectors can be valid for the point in time at which they are needed and be optimized for both, Yr and Yb time-instances. There is no significant advantage in optimizing the vectors for a single temporal instance and in using them at multiple instances.

Using a single set of vectors for multiple time instances is of greater interest, if the motion vectors are calculated outside of the system of Fig. 3 or 4, e.g. for de-interlacing purposes or if an existing IC (integrated circuit) for motion compensation video format conversion is used to provide the motion vectors. In such cases, the motion vectors can be valid at a single time instance, be up-converted to the output rate space and be used for multiple instances. Although a small error is made with this approach, a significant cost saving may be achieved by only performing a single motion estimation in these cases.

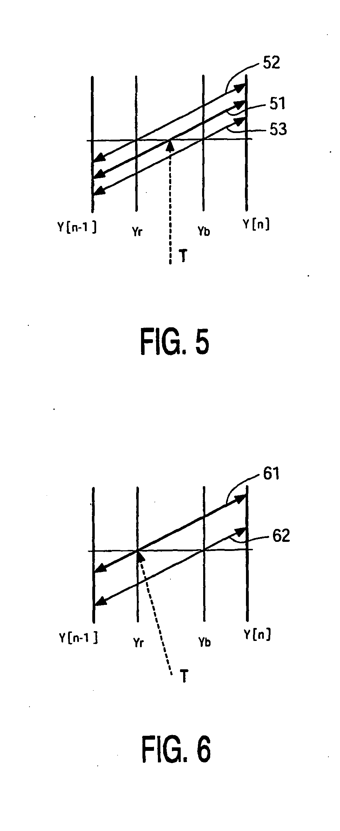

Fig. 5 illustrates by way of example a first possibility of using a single set of motion vectors for each picture. Fig. 5 is a diagram, in which a first vertical line represents the instance of time of a first picture n-1, indicated by Y[n-1], and in which a second vertical line represents the instance of time of a second picture n, indicated by Y[n]. The indicated instances of time Y[n-1] and Y[n] correspond to the time instances of display of the Green components of the luminance signal Y for pictures n-1 and n. The time instances of display of the Green components are thus used as reference time instances, and no motion compensation is performed on the Green components of the YUV signals. A first line with arrows 51 represents a motion vector at a certain image position. A motion estimation portion calculated this vector. As shown in Fig. 5, the vector 51 is valid at a particular time instance T for which it has been calculated, in the presented example halfway in between the time instances of images Y[n-1] and Y[n]. For the calculation of the signals Yr and Yb, motion vectors at their respective time instances are required. In the presented example, the value of motion vector 51 is applied for the Yr signal as vector 52 and it is applied for the Yb signal as vector 53. This way, a single motion vector from the estimation portion is used to calculate both, the Yr and the Yb signal. Although this introduces a small error, the perceived artifacts are generally well acceptable.

Fig. 6 illustrates by way of example a second possibility of using a single set of motion vectors for each picture. Fig. 6 is again a diagram, in which a first vertical line represents the instance of time of a first picture n-1, indicated by Y[n-1], and in which a second vertical line represents the instance of time of a second picture n, indicated by Y[n]. The indicated instances of time Y[n-1] and Y[n] correspond to the time instances of display of the Green components of the luminance signal Y for pictures n-1 and n. The time instances of display of the Green components are thus used as reference time instances, and no motion compensation is performed on the Green components of the YUV signals. A first line with arrows 61 represents a motion vector at a certain image location. A motion estimation portion calculated this vector. As shown in the Fig., the vector 61 is valid at a particular time instance T for which it has been calculated. The motion estimation portion is controlled in such a way that the vector is valid for the temporal instance of the Yr signal. For the calculation of the Yb signal, a motion vector at its respective time instance is required. In this example, the value of the motion vector 61 is also applied for the Yb signal as vector 62. This way, a single motion vector from the motion estimation portion is used to calculate both, the Yr and the Yb signal. The vector is correct for the Yr signal, but a small error is introduced for the Yb signal. Since the Yb signal contributes less to the perceived image quality than the Yr signal, this approach generally results in a better overall perceived image quality than the approach presented in Fig. 5.

In both approaches, a single set of motion vectors from a motion estimation portion, like motion estimation portion 7, is applied in a motion compensation portion, like motion compensation portion 8, to calculate luminance signals at the temporal instances of both, the Red and the Blue components. In the system of Fig. 3, the determined set of motion vectors is used in addition in the second motion compensation portion 12 to calculate both chrominance signals at the temporal instances of the Red and the Blue components.

It is to be noted that the described embodiments of the invention constitute only selected ones of several possible embodiments of the invention. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. Method for processing signals representing a series of colored pictures, which colored pictures are to be displayed on a color sequential display, said method comprising:
receiving (4) signals representing a series of colored pictures (R, G, B);
applying a motion compensation (6-8, 11, 12) to said received signals in a luminance/chrominance space (Y, U, V) which is different from a primary color space (R, G, B) obtain at least partly motion compensated signals;
converting (9) said at least partly motion compensated signals into a primary color space (R, G, B) to obtain at least three primary color components of said series of colored pictures; and
displaying (3) said at least three primary color components for each of said colored pictures, wherein said at least three primary color components are displayed by said color sequential display at least partially in sequence,
wherein in the received signals representing the series of colored pictures, successive pictures are spaced at a first time interval
wherein a time-compression is performed in the luminance/chrominance space (Y,U,V)
wherein in the obtained primary color components of said series of colored pictures, successive pictures are spaced at equal, predetermined second time intervals at which second time interval the colored pictures will be displayed,
wherein the signal in the luminance space (Y) is time-compressed and delayed by a first compression portion (5) and the signals in the chrominance space (UV) are time-compressed and delayed by a second time compression portion (10), and
wherein respective motion compensated luminance signals are yielded at the temporal instances of the respective primary color components.

2. Method according to claim 1, wherein said received signals representing a series of colored pictures comprise at least three primary color components of a series of colored pictures, said method further comprising converting said at least three primary color components into said color space which is different from said primary color space before applying said motion compensation to said received signals in said color space which is different from said primary color space.

3. The method according to claim 1, wherein said motion compensation is applied to said received signals in said luminance/chrominance space to obtain in addition at least partly motion compensated chrominance signals, wherein said motion compensation is performed for less temporal instances for said chrominance signals than for said luminance signal.

4. The method according to claim 1, wherein at least three of said primary color components which are displayed for each of said color pictures are displayed in sequence, wherein said motion compensation portion comprises deriving means for each successive pair of pictures of said series of colored pictures motion vectors from a motion estimation for a single temporal instance and means for applying said derived motion vectors on the correct temporal instances of display of at least two of said at least three primary color components which are displayed in sequence.

5. The method according to claim 1, wherein said motion compensation is performed for multiple pictures of said series of colored pictures in a single pass.

6. The method according to claim 1, wherein said primary color components are Red, Green and Blue color components, and wherein said motion compensation is based on a motion estimation for the correct temporal instance of display of said Red color components.

7. The method according to claim 1, wherein said received signals are interlaced signals, said method further comprising de-interlacing said received interlaced signals in said luminance/chrominance space which is different from said primary color space.

8. The method according to claim 7, wherein said motion compensation is performed during said de-interlacing.

9. The method as claimed in claim 1, further comprising calculating chrominance signals for a current picture of said series of colored pictures by means of a median filter operation using non-motion compensated samples from a preceding picture, non-motion compensated samples from said current picture and a value indicating an absence of color.

10. Apparatus for displaying a series of colored pictures on a color sequential display, which apparatus comprises:
- a receiving portion (4) for receiving signals which represent a series of colored pictures, successive color pictures being spaced at a first time interval;
- a motion estimation portion for performing motion estimation in an output picture rate space for a signal in the luminance space (Y);
- a motion compensation portion (6-8, 11,12) for applying a motion compensation in the output picture rate space to received picture signals in a luminance/chrominance space (Y, U, V) which is different from a primary color space (R,G,B) to obtain at least partly motion compensated signals at the time instance at which the primary color components are needed for the color sequential display, and
- a first compression portion for time-compressing and delaying the signals in the luminance space (Y),
- a second compression portion for time-compressing and delaying the signals in the chrominance space (UV), said first and second compression portions enabling display of color components successively in equal, predetermined time intervals;
- a converting portion (9) for converting at least partly motion compensated signals provided by said motion compensation portion (6-8, 11, 12) into a primary color space to obtain at least three primary color components of a series of colored pictures and providing in sequence at least three primary color components (R, G, B) for display, successive primary color components being spaced at equal, predetermined second time intervals wherein the signal in the luminance space (Y) is time-compressed and delayed by a first compression portion (5) and the signals in the chrominance space (UV) are time-compressed and delayed by a second time compression portion (6), and
wherein respective motion compensated luminance signals are yielded at the temporal instances of the respective primary color components.

11. A system for displaying a series of colored pictures on a color sequential display device, which system comprises:
- an apparatus as claimed in Claim 10, and
- a color sequential display (3) for displaying at least three primary color components received from said converting portion for each picture of a series of colored pictures, wherein said at least three primary color components are displayed by said color sequential display at least partially in sequence.

## Patentansprüche

1. Verfahren zum Verarbeiten von Signalen, die eine Reihe von farbigen Bildern darstellen, wobei die farbigen Bilder auf einer farbsequentiellen Anzeige anzuzeigen sind, wobei das Verfahren umfasst:
Empfangen (4) von Signalen, die eine Reihe von farbigen Bildern (R, G, B) darstellen;
Anwenden einer Bewegungskompensation (6-8, 11, 12) auf die empfangenen Signale in einem Luminanz/Chrominanz-Raum (Y, U, V), der sich von einem primären Farbraum (R, G, B) unterscheidet, um wenigstens teilweise bewegungskompensierte Signale zu erhalten;
Konvertieren (9) der wenigstens teilweise bewegungskompensierten Signale in einen primären Farbraum (R, G, B), um wenigstens drei primäre Farbkomponenten der Reihe von farbigen Bildern zu erhalten; und
Anzeigen (3) der wenigstens drei primären Farbkomponenten für jedes der farbigen Bilder, wobei die wenigstens drei primären Farbkomponenten wenigstens teilweise der Reihe nach angezeigt werden,
wobei in den empfangenen Signalen, die die Reihe der farbigen Bilder darstellen, aufeinanderfolgende Bilder durch ein erstes Zeitintervall beabstandet sind,
wobei eine zeitliche Kompression im Luminanz/Chrominanz-Raum (Y, U, V) durchgeführt wird,
wobei in den erhaltenen primären Farbkomponenten der Reihe von farbigen Bildern aufeinanderfolgende Bilder durch gleiche, vorbestimmte zweite Zeitintervalle beabstandet sind, wobei die farbigen Bilder bei dem zweiten Zeitintervall angezeigt werden,
wobei das Signal im Luminanzraum (Y) durch einen ersten Kompressionsteil (5) zeitlich komprimiert und verzögert wird und die Signale im Chrominanzraum (UV) durch einen zweiten Zeitkompressionsteil (10) zeitlich komprimiert und verzögert werden, und
wobei entsprechende bewegungskompensierte Luminanzsignale zu den zeitlichen Instanzen der jeweiligen primären Farbkomponenten geliefert werden.

2. Verfahren nach Anspruch 1, wobei die empfangenen Signale, die eine Reihe von farbigen Bildern darstellen, wenigstens drei primäre Farbkomponenten von einer Reihe von farbigen Bildern umfassen, wobei das Verfahren ferner vor dem Anwenden der Bewegungskompensation auf die empfangenen Signale in dem Farbraum, der sich von dem primären Farbraum unterscheidet, das Konvertieren der wenigstens drei primären Farbkomponenten in diesen Farbraum, der sich von diesem primären Farbraum unterscheidet, umfasst.

3. Verfahren nach Anspruch 1, wobei die Bewegungskompensation auf die empfangenen Signale in diesem Luminanz/Chrominanz-Raum angewendet wird, um zusätzlich wenigstens teilweise bewegungskompensierte Chrominanzsignale zu erhalten, wobei die Bewegungskompensation für die Chrominanzsignale für weniger zeitliche Instanzen durchgeführt wird als für das Luminanzsignal.

4. Verfahren nach Anspruch 1, wobei wenigstens drei der primären Farbkomponenten, die für jedes der Farbbilder angezeigt werden, der Reihe nach angezeigt werden, und wobei der Bewegungskompensationsteil Ableitmittel umfasst, um für jedes aufeinander folgende Paar von Bildern der Reihe von farbigen Bildern Bewegungsvektoren von einer Bewegungsschatzung für eine einzige zeitliche Instanz abzuleiten, sowie Mittel umfasst zum Anwenden der abgeleiteten Bewegungsvektoren auf die korrekten zeitlichen Instanzen der Anzeige von wenigstens zwei von den wenigstens drei primären Farbkomponenten, die der Reihe nach angezeigt werden.

5. Verfahren nach Anspruch 1, wobei die Bewegungskompensation für mehrere Bilder der Reihe von farbigen Bildern in einem einzigen Durchgang durchgeführt wird.

6. Verfahren nach Anspruch 1, wobei die primären Farbkomponenten rote, grüne und blaue Farbkomponenten sind, und wobei die Bewegungskompensation auf einer Bewegungsschätzung für die korrekte zeitliche Instanz der Anzeige der roten Farbkomponenten basiert.

7. Verfahren nach Anspruch 1, wobei die empfangenen Signale Zeilensprungverfahren-Signale sind, wobei das Verfahren ferner die Zeilenentflechtung der empfangenen Zeilensprungverfahren-Signale in dem Luminanz/Chrominanz-Raum, der sich von dem primären Farbraum unterscheidet, umfasst.

8. Verfahren nach Anspruch 7, wobei die Bewegungskompensation wahrend der Zeilenentflechtung durchgeführt wird.

9. Verfahren nach Anspruch 1, das ferner das Berechnen von Chrominanzsignalen für ein gegenwärtiges Bild dieser Reihe von farbigen Bildern mittels einer Medianfilteroperation unter Verwendung von nichtbewegungskompensierten Abtastwerten von einem vorhergehenden Bild, nichtbewegungskompensierten Abtastwerten von dem gegenwärtigen Bild und einem Wert, der eine Abwesenheit von Farbe anzeigt, umfasst.

10. Vorrichtung zum Anzeigen einer Reihe von farbigen Bildern auf einer farbsequentiellen Anzeige, wobei die Vorrichtung umfasst:
einen Empfangsteil (4) zum Empfangen von Signalen, die eine Reihe von farbigen Bildern darstellen, wobei aufeinanderfolgende farbige Bilder durch ein erstes Zeitintervall beabstandet sind;
einen Bewegungsschätzungsteil zum Durchführen einer Bewegungsschätzung in einem Ausgangsbildratenraum für ein Signal im Luminanzraum (Y);
einen Bewegungskompensationsteil (6-8, 11, 12) zum Anwenden einer Bewegungskompensation im Ausgangsbildratenraum auf empfangene Bildsignale in einem Luminanz/Chrominanz-Raum (Y, U, V), der sich von einem primären Farbraum (R, G, B) unterscheidet, um wenigstens teilweise bewegungskompensierte Signale bei der zeitlichen Instanz, bei der die primären Farbkomponenten für die farbsequentielle Anzeige benötigt werden, zu erhalten, und
einen ersten Kompressionsteil zum zeitlichen Komprimieren und Verzögern der Signale im Luminanzraum (Y),
einen zweiten Kompressionsteil zum zeitlichen Komprimieren und Verzögern der Signale im Chrominanzraum (UV), wobei der erste und der zweite Kompressionsteil das Anzeigen der Farbkomponenten aufeinanderfolgend in gleichen, vorbestimmten Zeitintervallen ermöglichen;
einen Konvertierungsteil (9) zum Konvertieren von wenigstens teilweise bewegungskompensierten, durch den Bewegungskompensierungsteil (6-8, 11, 12) bereitgestellten Signalen in einen primären Farbraum, um wenigstens drei primäre Farbkomponenten einer Reihe von farbigen Bildern zu erhalten, und Bereitstellen von wenigstens drei primären Farbkomponenten (R, G, B) zur Anzeige, wobei aufeinanderfolgende primäre Farbkomponenten durch gleiche, vorbestimmte zweite Zeitintervalle beabstandet sind,
wobei das Signal im Luminanzraum (Y) durch einen ersten Kompressionsteil (5) zeitlich komprimiert und verzögert wird und die Signale im Chrominanzraum (UV) durch einen zweiten Zeitkompressionsteil (10) zeitlich komprimiert und verzögert werden, und
wobei entsprechende bewegungskompensierte Luminanzsignale zu den zeitlichen Instanzen der jeweiligen primären Farbkomponenten geliefert werden.

11. System zum Anzeigen von einer Reihe von farbigen Bildern auf einer farbsequentiellen Anzeigeeinrichtung, wobei das System umfasst:
eine Vorrichtung nach Anspruch 10; und
eine farbsequentielle Anzeige (3) zum Anzeigen von wenigstens drei von dem Konvertierungsteil für jedes Bild von einer Reihe von farbigen Bildern empfangenen primären Farbkomponenten, wobei diese mindestens drei primären Farbkomponenten durch diese farbsequentielle Anzeige mindestens teilweise der Reihe nach angezeigt werden.

## Revendications

1. Procédé permettant de traiter des signaux représentant une série d'images colorées, lesquelles images colorées doivent être affichées sur un affichage séquentiel couleur, ledit procédé comprenant :
la réception (4) de signaux représentant une série d'images colorées (R, G, B) ;
l'application d'une compensation de mouvement (6-8, 11, 12) aux dits signaux reçus dans un espace colorimétrique (Y,U,V), qui est différent d'un espace de couleurs primaires (R, G, B) afin d'obtenir des signaux ayant subi au moins en partie une compensation de mouvement ;
la conversion (9) desdits signaux ayant subi au moins en partie une compensation de mouvement en un espace de couleurs primaires (R, G, B) afin d'obtenir au moins trois composantes de couleurs primaires de ladite série d'images colorées, et
l'affichage (3) desdites au moins trois composantes de couleurs primaires pour chacune desdites images colorées, dans lequel lesdites au moins trois composantes de couleurs primaires sont affichées, au moins en partie, de manière séquentielle,
dans lequel dans les signaux reçus représentant la série d'images colorées des images successives sont espacées au niveau d'un premier intervalle de temps,
dans lequel une compression temporelle est exécutée dans l'espace colorimétrique (Y, U, V),
dans lequel dans les composantes de couleurs primaires obtenues de ladite série d'images colorées, des images successives sont espacées au niveau de seconds intervalles de temps égaux, prédéterminés, auquel second intervalle de temps les images colorées seront affichées,
dans lequel le signal dans l'espace de luminance (Y) est comprimé dans le temps et retardé par une première partie de compression (r) et les signaux dans l'espace de chrominance (nv) sont comprimés dans le temps et retardés par une seconde partie de compression temporelle (10), et
dans lequel des signaux de luminance respectifs à compensation temporelle sont produits aux instants temporels des composantes des couleurs primaires respectives.

2. Procédé suivant la revendication 1, dans lequel lesdits signaux reçus représentant une série d'images colorées comprennent au moins trois composantes de couleurs primaires d'une série d'images colorées, ledit procédé comprenant, en outre, la conversion desdites au moins trois composantes de couleurs primaires en ledit espace colorimétrique, qui est différent dudit espace de couleurs primaires, avant l'application de ladite compensation de mouvement aux dits signaux reçus dans ledit espace colorimétrique qui est différent dudit espace de couleurs primaires.

3. Procédé selon la revendication 1, dans lequel ladite compensation de mouvement est appliquée aux dits signaux reçus dans ledit espace de chrominance/luminance afin d'obtenir, en plus, des signaux de chrominance ayant subi au moins en partie une compensation de mouvement, dans lequel ladite compensation de mouvement est exécutée pour un nombre moindre d'instants temporels pour lesdits signaux de chrominance que pour ledit signal de luminance.

4. Procédé selon la revendication 1, dans lequel au moins trois desdites composantes de couleurs primaires qui sont affichées pour chacune desdites images de couleur sont affichées de manière séquentielle, dans lequel ladite partie de compensation de mouvement comprend des moyens de dérivation pour chaque paire successive d'images de ladite série de vecteurs de mouvement d'images colorées à partir d'une estimation de mouvement correspondant à un instant temporel unique et des moyens pour appliquer lesdits vecteurs de mouvement dérivés sur les instants temporels corrects d'affichage d'au moins deux desdites au moins trois composantes de couleurs primaires qui sont affichées de manière séquentielle.

5. Procédé selon la revendication 1, dans lequel ladite grande compensation de mouvement est exécutée pour de multiples images de ladite série d'images colorées en un seul passage.

6. Procédé selon la revendication 1, dans lequel lesdites composantes de couleurs primaires sont les composantes des couleurs Rouge, Vert et Bleu, et dans lequel ladite compensation de mouvement est fondée sur une estimation de mouvement pour l'instant temporel correct d'affichage desdites composantes de couleur Rouge.

7. Procédé selon la revendication 1, dans lequel lesdits signaux reçus sont des signaux entrelacés, ledit procédé comprenant, de plus, un désentrelacement desdits signaux entrelacés reçus dans ledit espace colorimétrique qui est différent dudit espace de couleurs primaires.

8. Procédé selon la revendication 7, dans lequel ladite compensation de mouvement est exécutée pendant ledit désentrelacement.

9. Procédé selon la revendication 1, comprenant, de plus, le calcul de signaux de chrominance pour une image actuelle de ladite série d'images colorées au moyen d'une opération de filtre médian utilisant des échantillons n'ayant pas subi de compensation de mouvement provenant d'une image précédente, des échantillons n'ayant pas subi de compensation de mouvement provenant de ladite image actuelle et une valeur indiquant une absence de couleur.

10. Appareil servant à afficher une série d'images colorées sur un affichage séquentiel couleur, lequel appareil comporte :
- une partie de réception (4) destinée à recevoir des signaux qui représentent une série d'images colorées, les images de couleur successives étant espacées selon un premier intervalle de temps ;
- une partie d'estimation de mouvement destinée à exécuter une estimation de mouvement dans un espace de débit d'image de sortie pour un signal dans l'espace de luminance (Y) ;
- une partie de compensation de mouvement (6-8 ; 11, 12) pour appliquer une compensation de mouvement dans l'espace de débit d'image de sortie aux signaux d'image reçus dans un espace colorimétrique (Y, U, V) qui est différent d'un espace de couleurs primaires (R, G, B) afin d'obtenir des signaux ayant subi au moins partiellement une compensation de mouvement à l'instant temporel auquel les composantes de couleurs primaires sont nécessaires à l'affichage séquentiel couleur, et
- une première partie de compression pour comprimer temporellement et retarder les signaux dans l'espace de luminance (Y),
- une seconde partie de compression pour comprimer temporellement et retarder les signaux dans l'espace de chrominance (UV), lesdites première et seconde parties de compression permettant un affichage des composantes de couleur successivement dans des intervalles de temps égaux et prédéterminés ;
- une partie de conversion (9) permettant de convertir des signaux ayant subi au moins partiellement une compensation de mouvement fournis par ladite partie de compensation de mouvement (6-8, 11, 12) en un espace de couleurs primaires afin d'obtenir au moins trois composantes de couleurs primaires d'une série d'images colorées et de fournir de manière séquentielle au moins trois composantes de couleurs primaires (R, G, B) en vue d'un affichage des composantes de couleurs primaires successives espacées selon de seconds intervalles de temps égaux et prédéterminés, dans lequel le signal dans l'espace de luminance (Y) est comprimé temporellement et retardé par une première partie de compression (r) et dans lequel les signaux dans l'espace de chrominance (nv) sont comprimés temporellement et retardés par une seconde partie de compression temporelle (6), et
dans lequel des signaux de luminance respectifs ayant subi une compensation de mouvement sont produits aux instants temporels des composantes de couleurs primaires respectives.

11. Système permettant d'afficher une série d'images colorées sur un dispositif d'affichage séquentiel couleur, lequel système comprend :
- un appareil selon la revendication 10, et
- un affichage séquentiel couleur (3) permettant d'afficher au moins trois composantes de couleurs primaires reçues de ladite partie de conversion pour chaque image d'une série d'images colorées, dans lequel lesdites au moins trois composantes de couleurs primaires sont affichées par ledit affichage séquentiel couleur au moins en partie de manière séquentielle.
